# FASCICULE DE BREVET EUROPEEN

(11) **EP 3 271 579 B1**
(45) Date de publication et mention de la délivrance du brevet: **30.01.2019**
(21) Numéro de dépôt: 16713959.1
(22) Date de dépôt: 24.02.2016
(51) Int. Cl.: F04B 1/20, F01B 3/00

(54) **MACHINE HYDRAULIQUE COMPRENANT UN BARILLET ENTRAÎNE EN ROTATION PAR SON CONTOUR EXTÉRIEUR**
HYDRAULISCHE MASCHINE MIT EINEM VOM ÄUSSEREN RAND GEDREHTEN ZYLINDERBLOCK
HYDRAULIC MACHINE COMPRISING A CYLINDER BLOCK ROTATED BY THE OUTER EDGE THEREOF

(30) Priorité: 19.03.2015 FR 1552265
(43) Date de publication de la demande: 24.01.2018
(73) Titulaire: Technoboost, 75116 Paris (FR)
(72) Inventeur: GROULT, Antonin, 78740 Vaux Sur Seine (FR); RENAULT, Aurelien, 78760 Jouars Pontchartrain (FR); SABRIE, Julien, 75013 Paris (FR)
(74) Mandataire: Fernandez, Francis Lionel
(86) Numéro de dépôt international: PCT/FR2016/050433
(87) Numéro de publication internationale: WO 2016/146914

(56) Documents cités:
- DE-C- 951 413
- US-A- 2 390 590
- US-A- 2 821 145
- US-A- 3 082 697
- US-A- 3 191 542

## Description

La présente invention concerne une machine hydraulique prévue pour un véhicule automobile hybride, ainsi qu'un module hydraulique et un véhicule automobile hybride équipés d'une telle machine.

Les véhicules hybrides comportent généralement un moteur thermique alimenté par un carburant, formant une motorisation principale, et une deuxième motorisation reliée à une réserve d'énergie auxiliaire, qui peut fonctionner en moteur en consommant cette énergie, ou à l'inverse fonctionner en génératrice en produisant une énergie rechargeant cette réserve lors des freinages du véhicule. L'énergie auxiliaire peut être en particulier l'électricité ou une pression hydraulique.

Un type de véhicule hybride connu, présenté notamment par le document US-A1-20120258838, comporte une machine électrique disposée entre l'embrayage monté en sortie du moteur thermique, et la transmission, qui est reliée à des batteries de stockage pour à partir d'une rotation de l'arbre d'entrée de cette transmission récupérer une énergie électrique, ou délivrer un couple moteur sur cet arbre.

Cependant les batteries électriques sont lourdes et encombrantes par rapport à la quantité d'énergie qu'elles peuvent stocker. De plus elles sont chères, et présentent par leurs matériaux un impact important sur l'environnement pour leur fabrication et leur recyclage.

On peut en variante disposer une machine hydraulique liée à l'arbre d'entrée de la transmission, pour récupérer une énergie avec cette machine travaillant en pompe en chargeant des accumulateurs hydrauliques, lors des freinages du véhicule notamment, pour restituer par la suite sur la transmission une énergie mécanique à partir de cette même machine travaillant en moteur.

Un type de machine hydraulique à barillet connu pouvant s'adapter sur des véhicules hybrides hydrauliques, en particulier sur les véhicules présentés ci-dessus, et décrit notamment par le document US-A-5358388, comporte un carter fermé supportant par deux roulements d'extrémité un arbre d'entrée, qui sort de ce carter par un côté appelé par convention côté avant.

L'arbre d'entrée entraîne en rotation un barillet comprenant des cylindres parallèles répartis autour de l'axe, chaque cylindre recevant un piston prenant appui axialement du côté avant sur un plateau incliné fixe en rotation, par l'intermédiaire d'un roulement formant une butée axiale. L'inclinaison de ce plateau suivant un axe perpendiculaire à l'arbre de la machine hydraulique, est variable pour changer la cylindrée de la machine hydraulique.

Un tour de rotation du barillet donne à chaque piston un mouvement formant un cycle complet comprenant une course dépendant de l'angle d'inclinaison du plateau, réglable par une commande d'inclinaison. La face arrière du barillet opposée au plateau inclinable, est en appui sur une platine circulaire fixe fermant l'extrémité des cylindres, qui comporte des collecteurs basse et haute pression.

Ce type de machine protégée par son carter fermé peut en particulier être fixé sur le carter d'une transmission, l'arbre de la machine rentrant dans ce carter pour être relié à un arbre intérieur, afin de recevoir ou de délivrer une puissance sur cet arbre intérieur. DE 951413 divulge une autre machine hydraulique.

Un problème qui se pose alors est que ce type de machine comprenant un arbre d'entrée porté à ses extrémités par deux paliers fixés dans son carter, comporte une longueur relativement importante qui est gênante pour certaines applications, notamment s'il faut l'intégrer à l'intérieur d'une transmission.

La présente invention, défini par les revendications, a notamment pour but d'éviter ces inconvénients de la technique antérieure.

Elle propose à cet effet une machine hydraulique pouvant fonctionner en moteur ou en pompe, comprenant un barillet tournant autour d'un axe principal, présentant des cylindres parallèles à l'axe recevant des pistons qui sont actionnés par un plateau incliné fixe en rotation, caractérisée en ce que le barillet comporte un moyen d'entraînement en rotation lié à son contour radial extérieur.

Un avantage de cette machine hydraulique et qu'en prévoyant un entraînement en rotation par l'extérieur du barillet, par exemple un pignon fixé sur son contour extérieur, engrenant sur un autre pignon disposé sur un arbre parallèle, on obtient une machine ne comportant pas d'arbre d'entrée, qui est très courte.

On peut alors plus facilement l'intégrer dans le carter d'une transmission présentant une longueur axiale disponible réduite, en particulier dans un module disposé entre un moteur thermique et une boîte de vitesses, qui doit être axialement très court pour imposer un décalage axial minimum de cette boîte.

La machine hydraulique selon l'invention peut de plus comporter une ou plusieurs des caractéristiques suivantes, qui peuvent être combinées entre elles.

Selon un mode de réalisation, le moyen d'entraînement en rotation du barillet comporte un pignon denté.

En particulier, le pignon denté peut être taillé directement sur la matière du barillet.

Avantageusement, le moyen d'entraînement en rotation est lié au barillet axialement entre deux roulements supportant ce barillet.

Avantageusement, la machine hydraulique comporte un vérin réglant l'inclinaison du plateau incliné, qui agit sensiblement radialement sur ce plateau.

L'invention a aussi pour objet un module hydraulique intermédiaire prévu pour être disposé entre un moteur thermique et une transmission d'un véhicule hybride hydraulique, pour relier un arbre d'entrée lié à ce moteur aligné sur un arbre de sortie lié à cette transmission, ce module comportant une machine hydraulique comprenant l'une quelconque des caractéristiques précédentes.

Selon un mode de réalisation, l'axe de la machine hydraulique est aligné sur celui des arbres d'entrée et de sortie.

Dans ce cas, la machine hydraulique peut être entraînée par un train planétaire.

Selon un autre mode de réalisation, l'axe de la machine hydraulique est décalé latéralement par rapport à l'axe des arbres d'entrée et de sortie, cette machine étant entraînée par un pignon disposé sur le contour extérieur du barillet.

L'invention a de plus pour objet un véhicule automobile hybride utilisant une énergie hydraulique, comprenant un moteur thermique entraînant une transmission, ce véhicule comportant un module hydraulique comprenant l'une quelconque des caractéristiques précédentes, qui est disposé entre ce moteur et cette transmission.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma de principe du montage d'un module hydraulique disposé entre un moteur et une transmission, recevant une machine hydraulique ;
- la figure 2 est un schéma d'une machine hydraulique selon l'art antérieur ;
- la figure 3 est un schéma d'une machine hydraulique selon l'invention ; et
- les figures 4 et 5 sont des schémas d'un module hydraulique prévu pour être disposé entre un moteur et une transmission, comprenant une machine hydraulique selon l'invention, qui est respectivement radialement décalée par rapport à l'axe du moteur, et alignée sur cet axe.

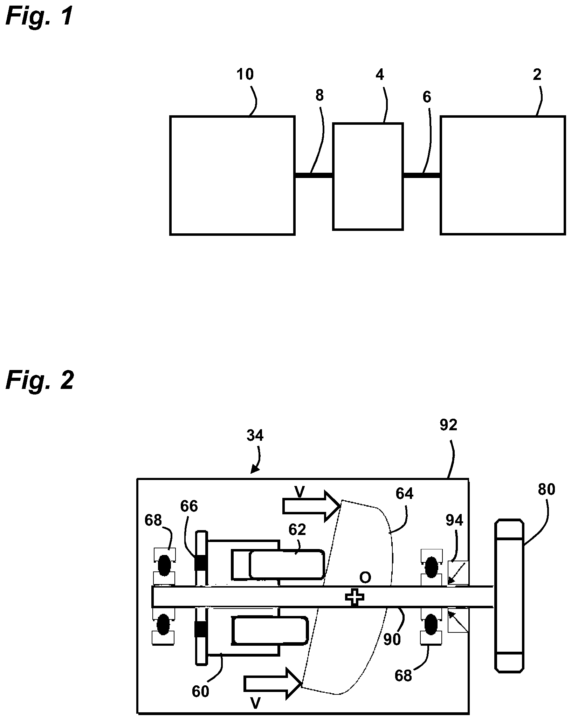

La figure 1 présente un module hydraulique fermé 4 recevant d'un côté la puissance de l'arbre 6 d'un moteur thermique 2, appelé par la suite arbre d'entrée, pour la renvoyer vers l'arbre 8 d'une transmission 10 comprenant différents rapports, appelé par la suite arbre de sortie. Les deux arbres d'entrée 6 et de sortie 8 sont alignés suivant un même axe, ce qui permet de garder une configuration d'origine habituellement utilisée sur les véhicules automobiles.

La transmission 10 peut être notamment une boîte de vitesses à commande manuelle ou à commande robotisée, une transmission à variation continue, une transmission à double embrayages ou une boîte automatique.

Le module hydraulique 4 comporte le moyen d'accouplement commandé généralement disposé à l'entrée de la transmission 10 pour la séparer du moteur thermique 2, notamment un embrayage à sec pour une boîte de vitesses manuelle ou robotisée, un double embrayage pour une boîte de vitesses à doubles embrayages, ou un convertisseur de couple pour une boîte de vitesses automatique.

Le module hydraulique 4 comporte à l'intérieur une machine hydraulique qui est reliée en permanence à l'arbre de sortie 8 formant l'entrée dans la transmission, afin de recevoir ou d'appliquer un couple moteur sur cet arbre, à partir d'une pression de fluide stockée dans un accumulateur hydraulique.

La figure 2 présente une machine hydraulique 34 d'un type connu, comprenant un arbre d'entrée 90 maintenu par deux roulements 68 disposés axialement de chaque côté du carter 92 de manière à obtenir un espacement important. Le mécanisme intérieur de la machine hydraulique 34 comprenant le barillet 60, ses pistons axiaux 62 et le plateau inclinable d'actionnement des pistons 64, est disposé axialement entre les deux roulements 68.

Le plateau inclinable 64 comporte un centre d'inclinaison qui se trouve au point O, disposé axialement dans une partie médiane de ce plateau. Cette inclinaison est réglée par deux vérins V agissant axialement, qui sont disposés en deux points diamétralement opposés par rapport à l'axe.

Le côté avant de l'arbre 90 passe après le roulement 68, par un joint d'étanchéité dynamique à lèvre 94 pour sortir du carter 92, son extrémité supportant un pignon 80 recevant le mouvement d'un arbre parallèle portant un pignon correspondant engrenant dessus.

On obtient une machine hydraulique 34 présentant un encombrement axial important, l'épaisseur de la paroi arrière du carter 92, des deux roulements 68, du joint d'étanchéité 94 et du pignon 80 venant s'ajouter à la longueur de son mécanisme intérieur.

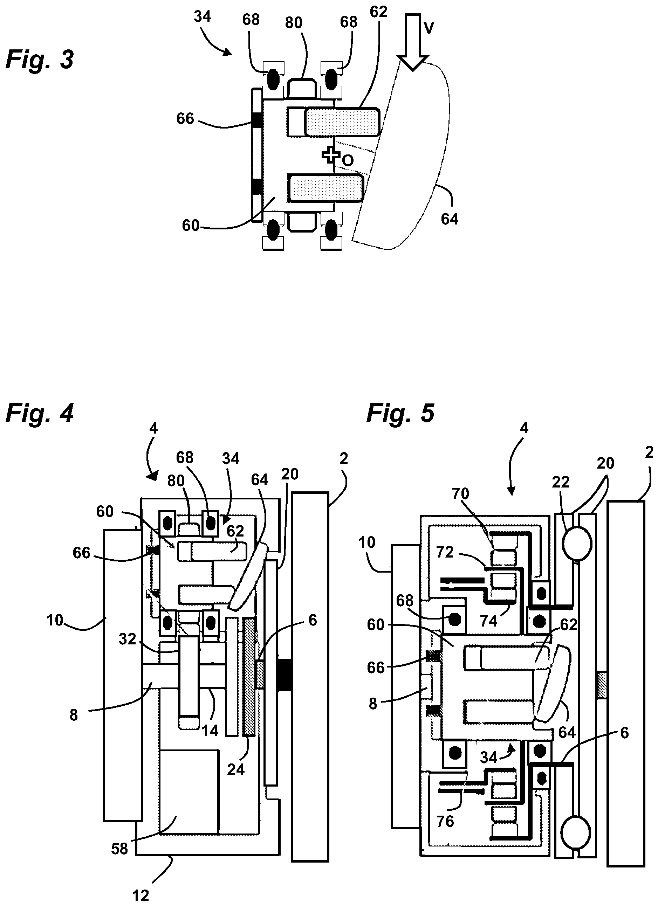

La figure 3 présente une machine hydraulique 34 comprenant un barillet 60 recevant sur son contour radialement extérieur deux roulements 68 disposés axialement aux extrémités de ce barillet, qui sont prévus pour être maintenus dans le carter du module hydraulique 4 tout en assurant une bonne stabilité au barillet.

Un pignon 80 fixé sur le contour extérieur du barillet 60, axialement entre les deux roulements 68, permet la transmission du mouvement vers un arbre parallèle portant un pignon complémentaire engrenant dessus. Le pignon 80 peut être rapporté sur le barillet 60, ou taillé directement dans la matière de ce barillet.

Le plateau inclinable 64 comporte un centre d'inclinaison qui se trouve au point O, disposé axialement à l'extérieur de ce plateau vers l'arrière, dans le barillet 60. Cette inclinaison est réglée par un vérin V agissant radialement, à une certaine distance axiale du point O pour obtenir un effort d'inclinaison.

On notera que le vérin V disposé radialement sur le côté, n'ajoute pas de longueur axiale sur la machine hydraulique 34. On obtient pour cette version un ensemble compact axialement.

La figure 4 présente un module hydraulique 4 comprenant un premier volant d'inertie 20 du moteur thermique 2, qui se trouve à l'extérieur du carter fermé 12 de ce module. L'arbre d'entrée 6 est relié à l'arbre de sortie 8 qui lui est aligné, par un embrayage 24.

Un arbre intermédiaire 14 relié à l'arbre de sortie 8 qui le prolonge, porte un pignon 32 engrenant avec le pignon 80 de la machine hydraulique 34 réalisée suivant le modèle présenté figure 3, qui est disposée parallèlement à cet arbre. Le barillet 60 de cette machine 34 est guidé dans le carter fermé 12 par les deux roulements 68 qui l'entourent.

Un bloc hydraulique de commande 58 est disposé radialement vers l'extérieur du carter fermé 12, dans un secteur opposé à celui occupé par la machine hydraulique 34, afin de ne pas augmenter l'encombrement radial global du module hydraulique 4.

On obtient pour ce module hydraulique 4 comprenant la machine hydraulique 34 déportée, un ensemble qui peut être axialement court.

La figure 5 présente un module hydraulique 4 comprenant deux volants d'inertie 20 recevant un système d'amortissement des vibrations 22 disposé entre eux, qui se trouvent à l'extérieur du carter fermé 12. La machine hydraulique 34 est disposée suivant l'axe des arbres d'entrée 6 et de sortie 8 du module hydraulique 4. Le barillet de cette machine 60 est directement relié à l'arbre de sortie 8.

L'entrée de la puissance venant du moteur thermique 2 se fait par l'arbre d'entrée creux de grand diamètre 6, qui entraîne la couronne extérieure 70 d'un train planétaire comprenant un porte-satellites 72 relié directement au contour extérieur du barillet 60 de la machine hydraulique 34. Le pignon solaire 74 du train planétaire est relié à une forme cylindrique concentrique disposée vers l'arrière, entourée par un frein à bande 76 qui peut assurer son freinage progressif.

Le barillet 60 de la machine hydraulique 34 est guidé par les deux roulements 68 l'entourant, qui sont répartis axialement à ses extrémités, le roulement du côté du moteur thermique 2 étant disposé à l'intérieur de l'arbre creux d'entrée de grand diamètre 6. La liaison avec le porte-satellites 72 formant le moyen d'entraînement en rotation du barillet 60, est fixée axialement sur ce barillet entre les deux roulements 68.

Le plateau inclinable 64 de commande des pistons 62, est disposé aussi à l'intérieur de l'arbre d'entrée creux de grand diamètre 6.

Le frein à bande 76 constitue un moyen d'accouplement entre l'arbre d'entrée 6 et l'arbre de sortie 8 du module hydraulique 4, par le freinage du pignon solaire 74 du train planétaire donnant un entraînement progressif du porte satellite 72 avec une réduction de la vitesse, qui entraîne alors directement le barillet de la machine hydraulique 60 relié à l'arbre de sortie 8.

On obtient pour ce module hydraulique 4 comprenant la machine hydraulique 34 coaxiale, un ensemble qui est plus long axialement que la version présentée figure 4, mais qui peut comporter des dimensions radiales réduites.

On notera que ces deux versions de module hydraulique 4 comportent un carter fermé 12 qui peut être globalement cylindrique, avec un contour extérieur sensiblement aligné sur celui du volant d'inertie d'entrée 20. On peut alors loger ce module hydraulique 4 entre le moteur thermique 2 et la transmission 10 en prenant la place dédiée habituellement à l'embrayage à sec des boîtes de vitesses manuelles, ou au convertisseur de couple des transmissions automatiques.

Le véhicule hybride peut conserver un type de transmission 10 produit en grande série et de manière économique, en intercalant simplement le module hydraulique 4 entre cette transmission et le moteur thermique 2 pour réaliser l'hybridation.

On notera aussi qu'en regroupant un grand nombre de fonctions hydrauliques dans le carter fermé 12, on diminue le nombre de canalisations extérieures nécessaires, notamment vers un réservoir de fluide à la pression atmosphérique qui peut être interne.

## Revendications

1. Machine hydraulique pouvant fonctionner en moteur ou en pompe, comprenant un barillet (60) tournant autour d'un axe principal, présentant des cylindres parallèles à l'axe recevant des pistons (62) qui sont actionnés par un plateau incliné (64) fixe en rotation, le barillet (60) comportant un moyen d'entraînement en rotation (72, 80) lié à son contour radial extérieur, **caractérisée en ce que** le moyen d'entraînement en rotation (72, 80) est lié au barillet (60) axialement entre deux roulements (68) supportant ce barillet.

2. Machine hydraulique selon la revendication 1, **caractérisée en ce que** le moyen d'entraînement en rotation du barillet (60) comporte un pignon denté (80).

3. Machine hydraulique selon la revendication 2, **caractérisée en ce que** le pignon denté (80) est taillé directement sur la matière du barillet (60).

4. Machine hydraulique selon l'une quelconque des revendications précédentes, **caractérisée en ce qu'**elle comporte un vérin (V) réglant l'inclinaison du plateau incliné (64), qui agit sensiblement radialement sur ce plateau.

5. Module hydraulique intermédiaire prévu pour être disposé entre un moteur thermique (2) et une transmission (10) d'un véhicule hybride hydraulique, pour relier un arbre d'entrée (6) lié à ce moteur aligné sur un arbre de sortie (8) lié à cette transmission, **caractérisé en ce qu'**il comporte une machine hydraulique (34) réalisée suivant l'une quelconque des revendications précédentes.

6. Module hydraulique selon la revendication 5, **caractérisé en ce que** l'axe de la machine hydraulique (34) est aligné sur celui des arbres d'entrée (6) et de sortie (8).

7. Module hydraulique selon la revendication 6, **caractérisé en ce que** la machine hydraulique (34) est entraînée par un train planétaire.

8. Module hydraulique selon la revendication 5, **caractérisé en ce que** l'axe de la machine hydraulique (34) est décalé latéralement par rapport à l'axe des arbres d'entrée (6) et de sortie (8), cette machine étant entraînée par un pignon (80) disposé sur le contour extérieur du barillet (60).

9. Véhicule automobile hybride utilisant une énergie hydraulique, comprenant un moteur thermique (2) entraînant une transmission (10), **caractérisé en ce qu'**il comporte un module hydraulique (4) réalisé suivant l'une quelconque des revendications 5 à 8, qui est disposé entre ce moteur et cette transmission (10).

## Patentansprüche

1. Hydraulische Maschine, die als Motor oder Pumpe arbeiten kann, die einen Zylinderblock (60) umfasst, der um eine Hauptachse dreht, die Zylinder aufweist, die zu der Achse parallel sind, die die Kolben (62) aufnimmt, die von einer schrägen drehfesten Platte (64) betätigt werden, wobei der Zylinderblock (60) ein Mittel zum Antreiben in Drehung (72, 80) umfasst, das an seinem radial äußeren Rand verbunden ist, **dadurch gekennzeichnet, dass** das Mittel zum Antreiben in Drehung (72, 80) mit dem Zylinderblock (60) axial durch zwei Wälzlager (68), die diesen Zylinderblock stützen, verbunden ist.

2. Hydraulische Maschine nach Anspruch 1, **dadurch gekennzeichnet, dass** das Mittel zum Antreiben in Drehung des Zylinderblocks (60) ein Zahnrad (80) umfasst.

3. Hydraulische Maschine nach Anspruch 2, **dadurch gekennzeichnet, dass** das Zahnrad (80) direkt auf dem Material des Zylinderblocks (60) geschnitten ist.

4. Hydraulische Maschine nach einem der vorstehenden Ansprüche, **dadurch gekennzeichnet, dass** sie einen Hubzylinder (V) umfasst, der die Neigung der schrägen Platte (64), die im Wesentlichen radial auf diese Platte einwirkt, regelt.

5. Hydraulisches Zwischenmodul, das vorgesehen ist, um zwischen einer Brennkraftmaschine (2) und einem Getriebe (10) eines hydraulischen Hybridfahrzeugs angeordnet zu sein, um eine Eingangswelle (6), die mit dieser Maschine verbunden ist, die auf einer Ausgangswelle (8) ausgerichtet ist, die mit diesem Getriebe verbunden ist, zu verbinden, **dadurch gekennzeichnet, dass** es eine hydraulische Maschine (34) umfasst, die nach einem der vorstehenden Ansprüche hergestellt ist.

6. Hydraulikmodul nach Anspruch 5, **dadurch gekennzeichnet, dass** die Achse der hydraulischen Maschine (34) auf der der Eingangs- (6) und der Ausgangswelle (8) ausgerichtet ist.

7. Hydraulikmodul nach Anspruch 6, **dadurch gekennzeichnet, dass** die hydraulische Maschine (34) von einem Planetengetriebezug angetrieben ist.

8. Hydraulikmodul nach Anspruch 5, **dadurch gekennzeichnet, dass** die Achse der hydraulischen Maschine (34) seitlich in Bezug auf die Achse der Eingangs- (6) und der Ausgangswelle (8) versetzt ist, wobei diese Maschine von einem Ritzel (80) angetrieben wird, das auf dem äußeren Rand des Zylinderblocks (60) angeordnet ist.

9. Hybridkraftfahrzeug, das eine hydraulische Energie verwendet, das eine Brennkraftmaschine (2) umfasst, die ein Getriebe (10) antreibt, **dadurch gekennzeichnet, dass** es ein Hydraulikmodul (4) umfasst, das gemäß einem der Ansprüche 5 bis 8 hergestellt ist, das zwischen dieser Maschine und diesem Getriebe (10) angeordnet ist.

## Claims

1. A hydraulic machine able to function as a motor or as a pump, including a cylinder block (60) rotating about a main axis, having cylinders parallel to the axis receiving pistons (62) which are actuated by an inclined plate (64) which is fixed with regard to rotation, the cylinder block (60) comprising a means for driving in rotation (72, 80) connected to its outer radial edge, **characterized in that** the means (72, 80) for driving in rotation is connected to the cylinder block (60) axially between two rollers (68) supporting this cylinder block.

2. The hydraulic machine according to Claim 1, **characterized in that** the means for driving the cylinder block (60) in rotation comprises a toothed pinion (80).

3. The hydraulic machine according to Claim 2, **characterized in that** the toothed pinion (80) is shaped directly on the material of the cylinder block (60) .

4. The hydraulic machine according to any one of the preceding claims, **characterized in that** it comprises a jack (V) adjusting the inclination of the inclined plate (64), which acts substantially radially on this plate.

5. An intermediate hydraulic module provided to be disposed between a combustion engine (2) and a transmission (10) of a hybrid hydraulic vehicle, to connect an input shaft (6) connected to this engine aligned with an output shaft (8) connected to this transmission, **characterized in that** it comprises a hydraulic machine (34) realized according to any one of the preceding claims.

6. The hydraulic module according to Claim 5, **characterized in that** the axis of the hydraulic machine (34) is aligned with that of the input (6) and output (8) shafts.

7. The hydraulic module according to Claim 6, **characterized in that** the hydraulic machine (34) is driven by a planetary gear.

8. The hydraulic module according to Claim 5, **characterized in that** the axis of the hydraulic machine (34) is offset laterally with respect to the axis of the input (6) and output (8) shafts, this machine being driven by a pinion (80) disposed on the outer edge of the cylinder block (60).

9. A hybrid motor vehicle using a hydraulic energy, including a combustion engine (2) driving a transmission (10), **characterized in that** it comprises a hydraulic module (4) realized according to any one of Claims 5 to 8, which is disposed between this engine and this transmission (10).
